# EUROPEAN PATENT APPLICATION

(11) **EP 4 835 632 A1**
(43) Date of publication of application: **04.11.2026**
(21) Application number: 24910875.4
(22) Date of filing: 18.12.2024
(51) Int. Cl.: G06F 3/0481

(54) **CONTENT DISPLAY METHOD AND APPARATUS, DEVICE AND STORAGE MEDIUM**

(30) Priority: 29.12.2023 CN 202311865132
(71) Applicant: Beijing Zitiao Network Technology Co., Ltd., Beijing 100190 (CN)
(72) Inventor: SHI, Xiaohang, Beijing 100028 (CN); YANG, Chao, Beijing 100028 (CN); SU, Ruihai, Beijing 100028 (CN)
(74) Representative: Grünecker Patent- und Rechtsanwälte PartG mbB
(86) International application number: PCT/CN2024/140223
(87) International publication number: WO 2025/139944

(57) **Abstract**

Embodiments of the present disclosure provide a content display method and apparatus, a device, and a storage medium. The method comprises: displaying target content in a first display mode, wherein the target content is content of an embedded application, and the content of the embedded application comprises description information and image information, and in the first display mode, the description information is displayed by means of an information layer and the image information is displayed by means of an image layer; and switching from the first display mode to a second display mode in response to a mode switching operation, wherein in the second display mode, the information layer is hidden to stop displaying the description information. The content display method provided by the embodiments of the present disclosure can improve the display effect of the content of the embedded application and improve the efficiency of acquiring the content of the embedded application, thereby improving the user experience.

## Description

### CROSS-REFERENCE TO RELATED APPLICATION(S)

This application claims priority to Chinese Application No. 202311865132.6 filed in December 29, 2023, the disclosure of which is incorporated herein by reference in its entity.

### FIELD

Embodiments of the present disclosure relate to the technical field of interface processing and, in particular, to a content display method and apparatus, a device, and a storage medium.

### BACKGROUND

The feed is a common content distribution scenario at present, and based on the feed, contents in various forms, such as videos, images and texts, live streams, cards, etc., in a mixed arrangement may be presented to the user. In the prior art, if the user wants to enter an application program presented in the feed, it is necessary to jump out of the current feed page, which is inefficient and affects the user experience.

### SUMMARY

Embodiments of the present disclosure provide a content display method and apparatus, a device, and a storage medium.

In a first aspect, an embodiment of the present disclosure provides a content display method, comprising:
displaying target content in a first display mode, wherein the target content is content of an embedded application, the content of the embedded application comprising description information and image information, and in the first display mode, the description information is displayed by an information layer and the image information is displayed by an image layer; and
switching from the first display mode to a second display mode in response to a mode switching operation, in the second display mode, the information layer being hidden to stop displaying the description information.

In a second aspect, an embodiment of the present disclosure further provides a content display apparatus, comprising:
a first displaying module, configured to display target content in a first display mode, wherein the target content is content of an embedded application, the content of the embedded application comprises description information and image information, and in the first display mode, the description information is displayed by an information layer and the image information is displayed by an image layer; and
a second displaying module, configured to switch from the first display mode to a second display mode in response to a mode switching operation, in the second display mode, the information layer being hidden to stop displaying the description information.

In a third aspect, an embodiment of the present disclosure further provides an electronic device, wherein the electronic device comprises:
one or more processors; and
a storage apparatus, configured to store one or more programs,
wherein the one or more programs, when executed by the one or more processors, cause the one or more processors to implement the content display method according to the embodiment of the present disclosure.

In a fourth aspect, an embodiment of the present disclosure further provides a storage medium comprising computer-executable instructions, wherein the computer-executable instructions, when executed by a computer processor, are configured to perform the content display method according to the embodiment of the present disclosure.

### BRIEF DESCRIPTION OF THE DRAWINGS

In combination with the drawings and with reference to the following specific embodiments, the above and other features, advantages, and aspects of the embodiments of the present disclosure will become more apparent. Throughout the drawings, the same or similar reference numerals represent the same or similar elements. It should be understood that the drawings are schematic, and the components and elements are not necessarily drawn to scale.
Fig. 1 is a schematic flowchart of a content display method provided by an embodiment of the present disclosure;
Fig. 2 is an exemplary diagram of displaying target content provided by an embodiment of the present disclosure;
Fig. 3 is a flowchart of a content display method provided by an embodiment of the present disclosure;
Fig. 4 is a schematic structural diagram of a content display apparatus provided by an embodiment of the present disclosure; and
Fig. 5 is a schematic structural diagram of an electronic device provided by an embodiment of the present disclosure.

### DETAILED DESCRIPTION OF EMBODIMENTS

The embodiments of the present disclosure will now be described in more detail with reference to the drawings. Although certain embodiments of the present disclosure are shown in the drawings, it should be understood that the present disclosure may be implemented in various forms and should not be construed as limited to the embodiments set forth herein; rather, these embodiments are provided for a more thorough and complete understanding of the present disclosure. It should be understood that the drawings and embodiments of the present disclosure are only used for illustrative purposes and are not intended to limit the protection scope of the present disclosure.

It should be understood that the various steps described in the method implementations of the present disclosure may be performed in different orders and/or in parallel. Furthermore, the method implementations may comprise additional steps and/or omit the execution of the steps shown. The scope of the present disclosure is not limited in this regard.

As used herein, the term "comprise/comprises" and its variations are open-ended inclusions, i.e., "comprise/comprises but not limited to". The term "based on" means "based at least in part on". The term "one embodiment" means "at least one embodiment"; the term "another embodiment" means "at least one other embodiment"; and the term "some embodiments" means "at least some embodiments". Relevant definitions of other terms will be given in the following description.

It should be noted that the concepts such as "first" and "second" mentioned in the present disclosure are only used to distinguish different apparatuses, modules, or units, and are not used to limit the order or interdependence of the functions performed by these apparatuses, modules, or units.

It should be noted that the modifications of "one" and "multiple" mentioned in the present disclosure are illustrative and not restrictive, and those skilled in the art should understand that unless otherwise explicitly specified in the context, they should be understood as "one or more".

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, the user should be informed of the type, range of use, use scenarios, etc., of personal information involved in the present disclosure and obtain the authorization of the user in an appropriate manner in accordance with relevant laws and regulations.

For example, in response to receiving an active request from a user, prompt information is sent to the user to clearly inform the user that the requested operation will require access to and use of the user's personal information. As such, the user may independently choose, based on the prompt information, whether to provide the personal information to software or hardware, such as an electronic device, an application program, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also comprise a selection control for the user to choose whether to "agree" or "disagree" to provide the personal information to the electronic device.

It may be understood that the above process of notifying and obtaining user authorization is only illustrative and does not limit the implementations of the present disclosure, and other manners that satisfy relevant laws and regulations may also be applied to the implementations of the present disclosure.

It may be understood that the data involved in the technical solution (comprising but not limited to the data itself, acquisition or use of the data) should comply with the requirements of corresponding laws, regulations, and related provisions.

At present, when target content (such as an embedded application program) is pushed by means of an feed, to enter a page where the target content is located, it is necessary to jump out of a feed scenario, which leads to a long interaction path and destroys the continuity of the feed.

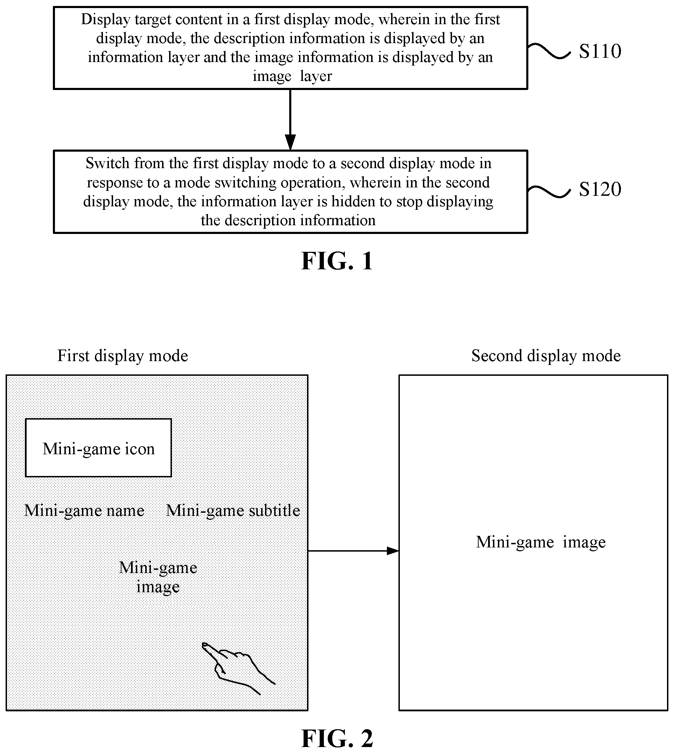

Fig. 1 is a schematic flowchart of a content display method provided by an embodiment of the present disclosure. The embodiment of the present disclosure is applicable to a case of displaying content in a feed. The method may be performed by a content display apparatus, which may be implemented in the form of software and/or hardware. Optionally, the method is implemented by an electronic device, which may be a mobile terminal, a PC, or a server.

As shown in Fig. 1, the method comprises:
S110, target content is displayed in a first display mode, and in the first display mode, description information is displayed by an information layer and image information is displayed by an image layer.

The target content is content of an embedded application (which also may be referred to as a mini-program), such as a mini-game. The content of the embedded application comprises the description information and the image information.

The information layer is located above the image layer, and the information layer may be presented in the form of a mask, and its transparency is a value greater than 0 and less than 1, that is, a semi-transparent state. The description information of the target content is displayed by means of the information layer, and the description information may comprise an icon, a name, a function introduction, or other supplementary information (such as a subtitle) of the target content. The image information of the target content is displayed through the image layer, and the image may be a live streaming image, a video image, a game image, or the like, which is not limited here.

In this embodiment, the target content may be content added to feed data. A switching manner between adjacent content in the feed data may be: switching by responding to a content switching operation (such as up-sliding, down-sliding, left-sliding, or right-sliding) triggered by a user or switching according to an automatically generated content switching instruction. The automatic generation of the content switching instruction may be automatically generated based on an end of playing of certain content or automatically generated when a playing time of certain content reaches a set value.

Specifically, a manner of displaying the target content in the first display mode may be: in the first display mode, it is switched to display a next piece of content or a previous piece of content of the target content in response to a content switching operation for the feed data.

In this embodiment, the content switching operation may be triggered in the information layer. In the first display mode, the user may switch the content in the feed data, for example, by up-sliding or down-sliding.

S120, it is switched from the first display mode to a second display mode in response to a mode switching operation, in the second display mode, the information layer is hidden to stop displaying the description information.

The mode switching operation may be triggered in the information layer. In this embodiment, a manner of triggering the mode switching operation may be: clicking any position in an information layer area or clicking a mode switching button in the information layer.

In this embodiment, when it is detected that the user triggers the mode switching operation in the information layer, the information layer is hidden to stop displaying the description information, and the image layer is kept to display the image information. Specifically, the image layer may be displayed on an uppermost layer, for example, the image information of the target content is displayed in a full screen manner. At this time, the user may interact with the target content in the image layer, that is, the user operates the target content by triggering the target content in the image layer. For example, assuming that the target content is a mini-game, the user may operate the mini-game in the second display mode.

For example, taking a mini-game as an example, Fig. 2 is an exemplary diagram of displaying target content in an embodiment of the present disclosure. As shown in Fig. 2, the mini-game is displayed in a first display mode in a left diagram, and the mini-game is displayed in a second display mode in a right diagram. In the left diagram, an interface comprises two layers, which are an information layer of the mini-game and an image layer of the mini-game, the information layer is located above the image layer, and the information layer is in a semi-transparent state. The information such as the icon of the mini-game, a name of the mini-game, and a subtitle of the mini-game is displayed in the information layer, and an image of the mini-game is displayed in the image layer. When the user clicks any position in the information layer, the first display mode is switched to the second display mode, the information layer is hidden and the image layer is kept, at this time, the user may operate the mini-game in the second display mode.

Optionally, the method further comprises the following step: in the second display mode, switching back from the second display mode to the first display mode in response to an exit operation, to continue displaying the feed data.

The exit operation may be triggered in the image layer, for example, by clicking an exit button in the image layer. In this embodiment, after switching back to the first display mode, the content switching operation triggered for the feed data continues to be responded to, to display the content in the feed data in sequence.

Optionally, before displaying the target content in the first display mode, the method further comprises the following steps: pulling feed data; and adding the target content to the feed data according to a set strategy.

The feed data is feed data corresponding to a target application, and the embedded application is an application embedded in the target application, that is, the target application may be understood as a host application, and the embedded application may be understood as a guest application. The feed data may be a group of contents pushed by a server to a client in a mixed arrangement in various forms (such as video, image and text, live stream, card, and other forms), and the contents in the mixed arrangement in various forms are arranged in a certain order. When displayed on the client, the client first creates a container corresponding to the feed, and displays the content by rendering each piece of content in the feed data into the container.

In this application scenario, an opportunity of adding the target content to the feed data is each-time refreshed feed data is sent from the server to the client. For the pushed feed data, if the target content is added to the feed data without limit, it will affect the user experience, therefore, it is necessary to add the target content to the feed data according to the set strategy.

The feed data comprises first content and second content. A manner of adding the target content to the feed data may be: adding the target content between the first content and the second content. Accordingly, before displaying the target content in the first display mode, the method further comprises: displaying the first content in a content display page. Accordingly, a manner of displaying the target content in the first display mode may be: in response to a first content switching operation, displaying the target content in the first display mode in the content display page. Accordingly, after displaying the target content in the first display mode, the method further comprises: in response to a second content switching operation, displaying the second content in the content display page.

The first content switching operation (referred to as the first switching operation for short, such as a sliding operation) may be triggered on the displayed first content, and in response to the first content switching operation, the target content is switched to and displayed from the first content in the content display page, and the target content is displayed in the first display mode. The second content switching operation may be triggered on the information layer corresponding to the target content, and in response to the second content switching operation (referred to as the second switching operation for short, such as a sliding operation), the second content is switched to and displayed from the target content in the content display page. In this embodiment, when the target content is displayed, there is no need to jump out of the content display page corresponding to the feed data, which may effectively shorten the interaction path in the feed and improve the interaction efficiency.

Optionally, a manner of adding the target content to the feed data according to the set strategy may be: adding the target content to the feed data if the following conditions are satisfied simultaneously: the pulled feed data does not comprise the target content, a set operation for the target content is not detected within a first preset time period, and a number of displays of the target content does not exceed a set threshold within a second preset time period.

The first preset time period and the second preset time period may be preset historical time periods. The set operation may comprise a close operation, a switching operation, and the like.

In this embodiment, when the client pulls once-refreshed feed data, it first determines whether the following conditions are satisfied: the feed data does not comprise the target content, the set operation of the user for the target content is not detected within the first preset time period, and the number of displays of the target content does not exceed the set threshold within the second preset time period, and then the client requests the target content from the server and adds the target content to the feed data.

Optionally, before displaying the target content in the first display mode, the method further comprises: pre-downloading a resource package of the target content and preloading a running environment of the target content.

The resource package of the target content may be an application program resource package corresponding to the target content, and the running environment of the target content may be an application program runtime corresponding to the target content.

In this embodiment, a process of pre-downloading the resource package of the target content may be: detecting whether a network environment corresponding to the target content satisfies a pre-download condition; if the network environment satisfies the pre-download condition, acquiring meta-information of the target content from a content delivery network according to an identification of the target content; and downloading a resource package of the target data according to a resource package address in the meta-information.

The pre-download condition is pre-configured, for example, the network of the client is connected and is in a wireless network environment. Acquiring the meta-information of the target content from the content delivery network according to the identification of the target content may be understood as: first connecting to the content delivery network, and then requesting the meta-information of the target content from the content delivery network according to the identification of the target content. Finally, the resource package of the target data is downloaded according to the resource package address in the meta-information. In this embodiment, the resource package of the target content is downloaded in advance, which may increase a display speed of the target content.

In this embodiment, a process of preloading the running environment of the target content may be: initializing the running environment of the application program corresponding to the target content, loading basic library program code, and completing program injection.

Optionally, the method further comprises the following steps: creating a view of the target content and associating the view with an interactive event when a previous piece of content of the target content is displayed; injecting the resource package into the running environment to run to obtain the image information of the target content; rendering the image information and the description information to the view; and adding the rendered view to the feed data.

In this application scenario, preloading the next piece of content in the background while displaying the current piece of content may increase a content display speed.

When a previous piece of content of the target content is displayed, preloading the target content in the background is started, and a process thereof may be: first creating the view of the target content and associating the view with the interactive event, then injecting the pre-downloaded resource package of the target content into the preloaded running environment to run to obtain the image information of the target content, then rendering the image information of the target content and the description information of the target content into the view, and finally adding the rendered view to the feed data to wait for display. Optionally, the above process may also be: first creating the view of the target content, binding the view with the interactive event, adding the view to the feed data, then injecting the pre-downloaded resource package of the target content into the preloaded running environment to run to obtain the image information of the target content, and then rendering the image information of the target content and the description information of the target content into the view added to the feed data to wait for display. When the target content is displayed, the rendered target content is directly displayed. In this embodiment, when the previous piece of content of the target content is displayed, the target content is pre-rendered, which may increase the display rate of the target content.

The view corresponding to the target content comprises the information layer and the image layer, and the information layer is located above the image layer. Accordingly, a manner of rendering the image information and the description information to the view may be: rendering the description information of the target content to the information layer; and rendering the image information of the target content to the image layer.

In this embodiment, the description information of the target content is rendered to the information layer, to display the description information of the target content by means of the information layer; and the image information of the target content is rendered to the image layer, to display the image information of the target content through the image layer.

Optionally, a manner of rendering the image information and the description information to the view may be: creating a drawing object according to the view; creating a canvas object; calling a rendering interface to render the image information and the description information into a second frame buffer; and copying the image information and the description information in the second frame buffer to a first frame buffer to render the image information and the description information to the view.

The drawing object comprises the first frame buffer. The canvas object comprises the second frame buffer. The drawing object may be understood as a graphic that may be drawn on a screen. The canvas object may represent a canvas element. In this embodiment, a manner of creating the canvas object may be implemented by calling a canvas creation method, which is not limited here.

Specifically, first the drawing object is created according to the view, then the canvas creation method is called to create the canvas object, then the rendering interface is called to execute a rendering instruction to render the image information and the description information into the second frame buffer of the canvas object, and finally the image information and the description information in the second frame buffer are copied to the first frame buffer to render the image information and the description information to the view, thus completing on-screen rendering. In this embodiment, the image information and the description information are rendered into the second frame buffer of the canvas object to implement off-screen rendering of the target content, and finally the image information and the description information in the second frame buffer are copied to the first frame buffer to implement on-screen rendering of the target content.

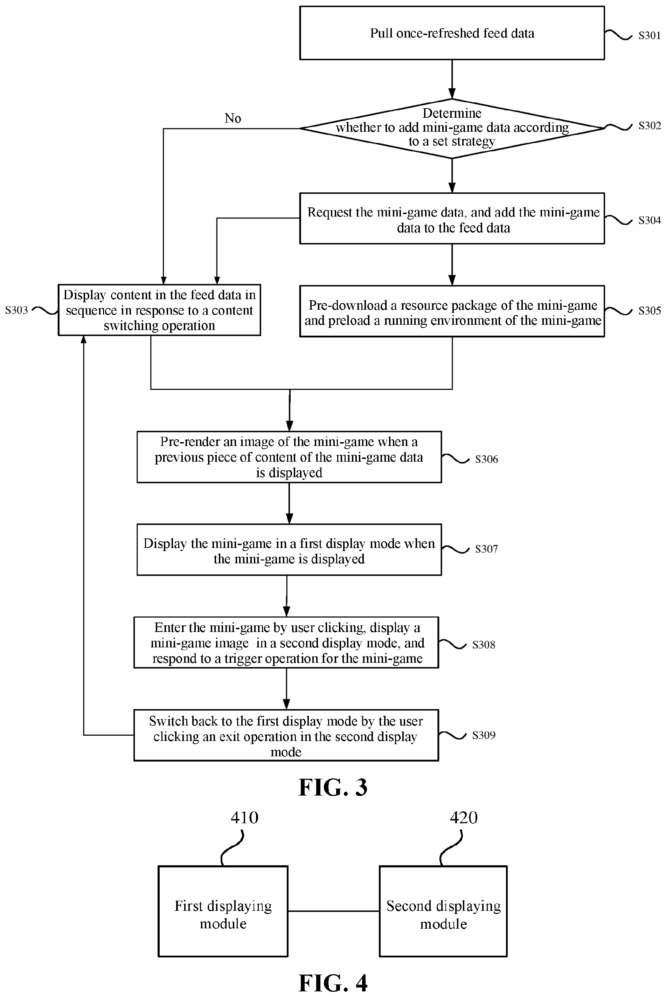

Optionally, based on the foregoing embodiments, taking a mini-game as an example, Fig. 3 is a flowchart of a target content display method according to an embodiment of the present disclosure. As shown in Fig. 3, the method comprises:
S301, once-refreshed feed data is pulled;
S302, it is determined whether to add mini-game data according to a set strategy, if not, S303 is executed; if yes, S304 is executed;
S303, content in the feed data is displayed in sequence in response to a content switching operation;
S304, the mini-game data is requested, the mini-game data is added to the feed data, and S303 is executed;
S305, a resource package of the mini-game is pre-downloaded and a running environment of the mini-game is preloaded;
S306, when a previous piece of content of the mini-game data is displayed, an image of the mini-game is pre-rendered;
S307, when the mini-game is displayed, the mini-game is displayed in a first display mode;
S308, the mini-game is entered by the user clicking, a mini-game image in a second display mode is displayed, and a trigger operation for the mini-game is responded; and
S309, it is switched back to the first display mode by the user clicking an exit operation in the second display mode, and it is continued to execute S303.

In the solution of this embodiment, by providing a lightweight view to support loading, displaying, and operating the target content in the feed data without jumping out of the current page, the interaction path for the target content may be effectively shortened and the efficiency may be improved.

In the technical solution of the embodiment of the present disclosure, the target content is displayed in the first display mode, wherein the target content is the content of the embedded application, the content of the embedded application comprising the description information and the image information, and in the first display mode, the description information is displayed by means of the information layer and the image information is displayed by means of the image layer; and the first display mode is switched to the second display mode in response to the mode switching operation, in the second display mode, the information layer is hidden to stop displaying the description information. In the content display method provided by the embodiment of the present disclosure, the content of the embedded application is first displayed in the first display mode, and the first display mode is switched to the second display mode in response to the mode switching operation, which may improve the display effect of the content of the embedded application and improve the acquisition efficiency of the content of the embedded application, thereby improving the user experience.

Fig. 4 is a schematic structural diagram of a content display apparatus provided by an embodiment of the present disclosure. As shown in Fig. 4, the apparatus comprises:
a first displaying module 410, configured to display target content in a first display mode, wherein the target content is content of an embedded application, the content of the embedded application comprising description information and image information, and in the first display mode, the description information being displayed by an information layer and the image information being displayed by an image layer; and
a second displaying module 420, configured to switch from the first display mode to a second display mode in response to a mode switching operation, in the second display mode, the information layer being hidden to stop displaying the description information.

Optionally, the second displaying module 420 is further configured to: keep the image layer to display the image information.

Optionally, the apparatus further comprises a target content adding module, configured to:
pull feed data; and
add the target content to the feed data according to a set strategy.

Optionally, the feed data comprises first content and second content;
the target content adding module is further configured to add the target content between the first content and the second content;
the apparatus further comprises a first content displaying module, configured to display the first content in a content display page;
accordingly, the first displaying module 410 is further configured to: in response to a first switching operation, display the target content in the first display mode in the content display page; and
the apparatus further comprises a second content displaying module, configured to: in response to a second switching operation, display the second content in the content display page.

Optionally, the feed data is feed data corresponding to a target application, and the embedded application is an application embedded in the target application.

Optionally, the target content adding module is further configured to:
add the target content to the feed data if the following conditions are satisfied simultaneously: the pulled feed data does not comprise the target content, a set operation for the target content is not detected within a first preset time period, and a number of displays of the target content does not exceed a set threshold within a second preset time period.

Optionally, the apparatus further comprises a pre-download module, configured to:
pre-download a resource package of the target content and preload a running environment of the target content.

Optionally, the pre-download module is further configured to:
detect whether a network environment corresponding to the target content satisfies a pre-download condition;
if the network environment satisfies the pre-download condition, acquire meta-information of the target content from a content delivery network according to an identification of the target content; and
download the resource package of the target data according to a resource package address in the meta-information.

Optionally, the apparatus further comprises a rendering module, configured to:
create a view of the target content and associate the view with an interactive event when a previous piece of content of the target content is displayed;
inject the resource package into the running environment to run to obtain the image information of the target content;
render the image information and the description information to the view; and
add the rendered view to the feed data.

Optionally, the view comprises an information layer and an image layer, the information layer is located above the image layer, and the rendering module is further configured to:
render the description information of the target content to the information layer; and
render the image information of the target content to the image layer.

Optionally, the rendering module is further configured to:
create a drawing object according to the view, the drawing object comprising a first frame buffer;
create a canvas object, the canvas object comprising a second frame buffer;
call a rendering interface to render the image information and the description information of the target content into the second frame buffer; and
copy the image information and the description information of the target content in the second frame buffer to the first frame buffer to render the image information and the description information of the target content to the view.

Optionally, the first displaying module 410 is further configured to:
in the first display mode, switch to display a next piece of content or a previous piece of content of the target content in response to a content switching operation for the feed data.

The content display processing apparatus provided by the embodiment of the present disclosure may perform the content display method provided by any embodiment of the present disclosure, and has corresponding functional modules and beneficial effects for performing the method.

It should be noted that the units and modules comprised in the apparatus are only divided according to functional logic, but are not limited to the above division, as long as the corresponding functions may be realized. In addition, the specific names of the functional units are only for the convenience of distinguishing from each other, and are not used to limit the protection scope of the embodiments of the present disclosure.

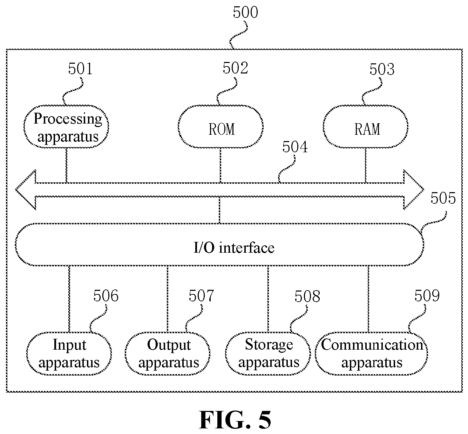

Fig. 5 is a schematic structural diagram of an electronic device provided by an embodiment of the present disclosure. Reference is made to Fig. 5 below, which illustrates a schematic structural diagram of an electronic device (such as a terminal device or a server in Fig. 5) 500 suitable for implementing the embodiments of the present disclosure. The terminal device in the embodiments of the present disclosure may comprise, but is not limited to, mobile terminals such as a mobile phone, a notebook computer, a digital broadcast receiver, a PDA (personal digital assistant), a tablet computer, a PMP (portable multimedia player), and a vehicle-mounted terminal (such as a vehicle navigation terminal), and fixed terminals such as a digital TV and a desktop computer. The electronic device shown in Fig. 5 is only an example, and should not impose any limitation on the function and scope of use of the embodiments of the present disclosure.

As shown in Fig. 5, the electronic device 500 may comprise a processing apparatus (such as a central processing unit and a graphics processor) 501, which may perform various appropriate actions and processing according to a program stored in a read-only memory (ROM) 502 or a program loaded from a storage apparatus 508 into a random access memory (RAM) 503. The RAM 503 further stores various programs and data required for operations of the electronic device 500. The processing apparatus 501, the ROM 502, and the RAM 503 are connected to each other through a bus 504. An editing/output (I/O) interface 505 is also connected to the bus 504.

Usually, the following apparatuses may be connected to the I/O interface 505: an input apparatus 506 comprising, for example, a touch screen, a touchpad, a keyboard, a mouse, a camera, a microphone, an accelerometer, and a gyroscope; an output apparatus 507 comprising, for example, a liquid crystal display (LCD), a speaker, and a vibrator; the storage apparatus 508 comprising, for example, a magnetic tape and a hard disk; and a communication apparatus 509. The communication apparatus 509 may allow the electronic device 500 to perform wireless or wired communication with other devices to exchange data. Although Fig. 5 shows the electronic device 500 having various apparatuses, it should be understood that it is not required to implement or have all the apparatuses shown. Alternatively, more or fewer apparatuses may be implemented or provided.

In particular, according to the embodiments of the present disclosure, the process described above with reference to the flowchart may be implemented as a computer software program. For example, an embodiment of the present disclosure comprises a computer program product, which comprises a computer program carried on a non-transitory computer-readable medium, wherein the computer program comprises program code for performing the method shown in the flowchart. In such an embodiment, the computer program may be downloaded and installed from the network through the communication apparatus 509, or installed from the storage apparatus 508, or installed from the ROM 502. When the computer program is executed by the processing apparatus 501, the above-mentioned functions defined in the method of the embodiments of the present disclosure are executed.

The names of messages or information exchanged between multiple apparatuses in the implementations of the present disclosure are only used for illustrative purposes, and are not used to limit the scope of these messages or information.

The electronic device provided by the embodiment of the present disclosure belongs to the same inventive concept as the content display method provided by the above-mentioned embodiments, and for technical details not described in detail in this embodiment, reference may be made to the above-mentioned embodiments, and this embodiment has the same beneficial effects as the above-mentioned embodiments.

An embodiment of the present disclosure provides a computer storage medium having a computer program stored thereon, wherein the content display method provided by the above-mentioned embodiments is implemented when the program is executed by a processor.

It should be noted that the above-mentioned computer-readable medium in the present disclosure may be a computer-readable signal medium, a computer-readable storage medium, or any combination thereof. The computer-readable storage medium may be, for example, but not limited to, an electronic, magnetic, optical, electromagnetic, infrared, or semi-conductive system, apparatus, device, or any combination thereof. More specific examples of the computer-readable storage medium may comprise, but are not limited to: an electrically connected portable computer disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may comprise a data signal propagated in a baseband or as a part of a carrier wave, and computer-readable program code is carried therein. This propagated data signal may be in various forms, comprising but not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted by any suitable medium, comprising but not limited to: a wire, an optical cable, a radio frequency (RF), etc., or any suitable combination thereof.

In some implementations, the client and the server may communicate using any currently known or future developed network protocol, such as the hypertext transfer protocol (HTTP), and may be interconnected with any form or medium of digital data communication (for example, a communication network). Examples of the communication network comprise a local area network ("LAN"), a wide area network ("WAN"), an internet (for example, the Internet), a peer-to-peer network (for example, an Ad-Hoc network), and any network currently known or to be developed in the future.

The above computer-readable medium may be comprised in the above electronic device, or it may exist alone without being assembled into the electronic device.

The above computer-readable medium carries one or more programs, which, when executed by the electronic device, cause the electronic device to:
The above computer-readable medium carries one or more programs, which, when executed by the electronic device, cause the electronic device to display target content in a first display mode, wherein the target content is content of an embedded application, the content of the embedded application comprising description information and image information, and in the first display mode, the description information being displayed by an information layer and the image information being displayed by an image layer; and switch from the first display mode to a second display mode in response to a mode switching operation, in the second display mode, the information layer being hidden to stop displaying the description information.

The computer program code for performing the operations of the present disclosure may be written in one or more programming languages or a combination thereof, wherein the programming languages comprise but are not limited to object-oriented programming languages such as Java, Smalltalk, and C++, and further comprise conventional procedural programming languages such as "C" language or similar programming languages. The program code may be executed entirely on a user's computer, partly on the user's computer, as a stand-alone software package, partly on the user's computer and partly on a remote computer, or entirely on the remote computer or server. In the case of involving the remote computer, the remote computer may be connected to the user's computer through any kind of network, comprising a local area network (LAN) or a wide area network (WAN), or it may be connected to an external computer (for example, connected by using Internet provided by an Internet service provider).

The flowchart and block diagrams in the drawings illustrate the possibly implemented architectures, functions, and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances, and for example, the first acquisition unit may also be described as "a unit that acquires at least two internet protocol addresses".

The foregoing functions described herein may be performed at least in part by one or more hardware logic components. For example, without limitation, exemplary types of hardware logic components that may be used comprise: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may comprise, but is not limited to, an electronic, magnetic, optical, electromagnetic, infrared, or semi-conductive system, apparatus or device, or any suitable combination thereof. More specific examples of the machine-readable storage medium may comprise: an electrically connected portable computer disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only a preferred embodiment of the present disclosure and an explanation of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalent features. For example, a technical solution formed by replacing the above features with technical features with similar functions disclosed in the present disclosure (but not limited thereto) also falls within the scope of the present disclosure.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion comprises several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A content display method, comprising:
displaying target content in a first display mode, wherein the target content is content of an embedded application, the content of the embedded application comprises description information and image information, and in the first display mode, the description information is displayed by an information layer and the image information is displayed by an image layer; and
switching, in response to a mode switching operation, from the first display mode to a second display mode, in the second display mode, the information layer being hidden to stop displaying the description information.

2. The method of claim 1, further comprising: keeping the image layer to display the image information.

3. The method of claim 1, wherein before displaying the target content in the first display mode, the method further comprises:
pulling feed data; and
adding the target content to the feed data according to a set strategy.

4. The method of claim 3, wherein the feed data comprises first content and second content, and adding the target content to the feed data comprises: adding the target content between the first content and the second content;
before displaying the target content in the first display mode, the method further comprises: displaying the first content in a content display page;
displaying the target content in the first display mode comprises: displaying, in response to a first switching operation, the target content in the first display mode in the content display page; and
after displaying the target content in the first display mode, the method further comprises: displaying, in response to a second switching operation, the second content in the content display page.

5. The method of claim 3, wherein the feed data is feed data corresponding to a target application, and the embedded application is an application embedded in the target application.

6. The method of claim 3, wherein adding the target content to the feed data according to the set strategy comprises:
adding the target content to the feed data in response to following conditions being satisfied simultaneously: the pulled feed data not comprising the target content, a set operation for the target content not being detected within a first preset time period, and a number of displays of the target content not exceeding a set threshold within a second preset time period.

7. The method of claim 3, wherein before displaying the target content in the first display mode, the method further comprises:
pre-downloading a resource package of the target content and preloading a running environment of the target content.

8. The method of claim 7, wherein pre-downloading the resource package of the target content comprises:
detecting whether a network environment corresponding to the target content satisfies a pre-download condition;
acquiring, in response to the network environment satisfying the pre-download condition, meta-information of the target content from a content delivery network according to an identification of the target content; and
downloading the resource package of the target data according to a resource package address in the meta-information.

9. The method of claim 7, further comprising:
creating, during a previous piece of content of the target content being displayed, a view of the target content and associating the view with an interactive event;
injecting the resource package into the running environment for running to obtain the image information of the target content;
rendering the image information and the description information to the view; and
adding the rendered view to the feed data.

10. The method of claim 9, wherein the view comprises an information layer and an image layer, the information layer is located above the image layer, and rendering the image information and the description information to the view comprises:
rendering the description information of the target content to the information layer; and
rendering the image information of the target content to the image layer.

11. The method of claim 9, wherein rendering the image information and the description information to the view comprises:
creating a drawing object according to the view, wherein the drawing object comprises a first frame buffer;
creating a canvas object, wherein the canvas object comprises a second frame buffer;
calling a rendering interface to render the image information and the description information of the target content into the second frame buffer; and
copying the image information and the description information of the target content in the second frame buffer to the first frame buffer to render the image information and the description information of the target content to the view.

12. The method of claim 3, wherein displaying the target content in the first display mode comprises:
in the first display mode, switching, in response to a content switching operation for the feed data, to display a next piece of content after the target content or a previous piece of content prior to the target content.

13. A content display apparatus, comprising:
a first displaying module, configured to display target content in a first display mode, wherein the target content is content of an embedded application, the content of the embedded application comprises description information and image information, and in the first display mode, the description information is displayed by an information layer and the image information being displayed by an image layer; and
a second displaying module, configured to switch, in response to a mode switching operation, from the first display mode to a second display mode, in the second display mode, the information layer being hidden to stop displaying the description information.

14. An electronic device, comprising:
one or more processors; and
a storage, configured to store one or more programs,
wherein the one or more programs, when executed by the one or more processors, cause the one or more processors to implement the content display method of any of claims 1 to 12.

15. A storage medium comprising computer-executable instructions, wherein the computer-executable instructions, when executed by a computer processor, are configured to perform the content display method of any of claims 1 to 12.
